# EUROPÄISCHE PATENTSCHRIFT

(11) **EP 0 564 671 B1**
(45) Veröffentlichungstag und Bekanntmachung des Hinweises auf die Patenterteilung: **18.10.1995**
(21) Anmeldenummer: 92105907.7
(22) Anmeldetag: 06.04.1992
(51) Int. Cl.: B60R 25/08

(54) **Vorrichtung zur Diebstahlsicherung**
Anti-theft device
Dispositif antivol

(43) Veröffentlichungstag der Anmeldung: 13.10.1993
(73) Patentinhaber: Niess, Rosa, D-89537 Giengen/Brenz (DE)
(72) Erfinder: Niess, Hans Peter, W-7928 Giengen (DE)
(74) Vertreter: Weitzel, Wolfgang, Dr.-Ing.

(56) Entgegenhaltungen:
- WO-A-91/08125
- WO-A-91/18771
- DE-C- 820 699
- DE-C- 930 730
- FR-A- 922 873

## Beschreibung

Die Erfindung betrifft eine Vorrichtung zur Diebstahlsicherung eines motorgetriebenen Fahrzeuges gemäß dem Oberbegriff von Anspruch 1.

Es gibt eine Vielzahl von Systemen zur Diebstahlsicherung. Dabei ist einerseits zu unterscheiden zwischen dem physikalischen Prinzip, das eine Sicherungsmaßnahme auslöst (Auslöseprinzip), und andererseits der Art der Sicherungsmaßnahme.

Als physikalisches Auslöseprinzip kommt beispielsweise das Melden einer Bewegung im Fahrzeuginneren in Betracht, oder einer starken Erschütterung, beispielsweise hervorgerufen durch Einschlagen einer Scheibe, oder das Unterbrechen eines Stromkreises, beispielsweise dann, wenn das Türschloß mit Gewalt aufgebrochen wird. Ein weiteres physikalisches Auslöseprinzip wäre das Verändern der Neigung des Fahrzeuges gegen die Horizontale. Eine solche Neigung tritt ja bekanntlich beim Abschleppen des Fahrzeuges auf, also auch beim Abschleppen durch einen Dieb.

Die Sicherungsmaßnahmen sind ebenfalls vielfältiger Art. So sind optische oder akustische Alarmsignale sehr gebräuchlich. Ferner kann in die Elektrik eingegriffen werden, in dem beispielsweise ein Einschalten der Zündung verhindert wird.

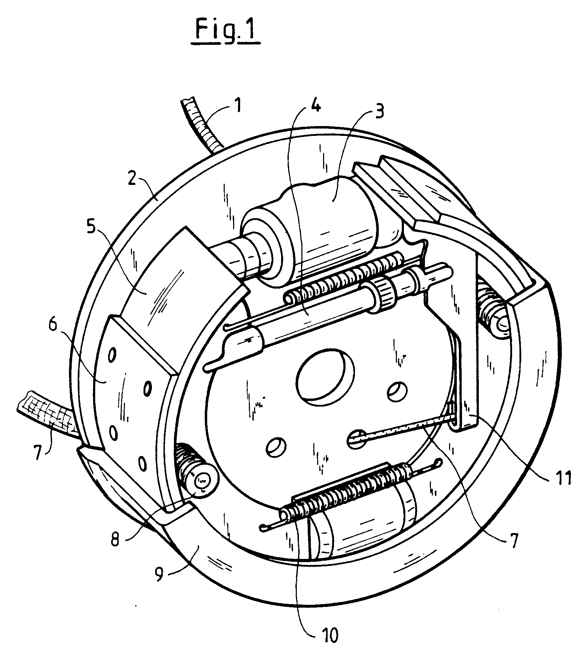

Das gattungsbildende Dokument FR-A-922.873 (D1) beschreibt eine Vorrichtung zur Diebstahlsicherung eines motorgetriebenen Fahrzeugs, das wenigstens eine Trommelbremse (Figuren 4 und 5) aufweist, die eine Bremstrommel sowie Bremsbacken 13, 14 umfaßt, die ihrerseits bei angezogener Bremse an der Bremstrommel anliegen. Eine Fahrzeugtür mit einem Türschloß, das eine Schließvorrichtung (A in Figur 1) mit zugehörendem Betätigungsorgan umfaßt, ist, wenn auch nicht ausdrücklich dargestellt, bei dem in der D1 genannten Fahrzeug sicherlich vorhanden. Aus der Figur 4 geht hervor, daß ein Verriegelungselement 17 zum Verriegeln der Bremsbacken 13, 14 in an der Bremstrommel anliegendem Zustand vorgesehen ist.

Auf Seite 2, Zeilen 30 bis 33 wird beschrieben, daß die elektrisch betätigte Sicherungsvorrichtung (Figur 5) der Bremse E durch die Schließvorrichtung A zusammen mit dem Verriegeln der Türen D aktivierbar und deaktivierbar ist.

Alle bisher bekannten Diebstahlsicherungsvorrichtungen haben ganz erhebliche Nachteile, und zwar bezüglich des physikalischen Auslöseprinzips, als auch der Art der Sicherung. So läßt sich in vielen Fällen durch den Dieb der Auslösevorgang rückgängig machen oder gar vermeiden, beispielsweise dann, wenn beim Einbrechen in die Fahrkabine mit entsprechender Vorsicht zu Werke gegangen wird. Auch besteht häufig die Gefahr einer Fehlbedienung durch den befugten Fahrzeugbenutzer selbst, z.B. bei falsch eingestellter Empfindlichkeit des alarmauslösenden Organes.

Die bisher bekannten Sicherungsmaßnahmen selbst sind keinesweg perfekt. So werden beispielsweise akustische Alarmsignale dann nicht wahrgenommen, wenn das Fahrzeug in einer menschenleeren Gegend abgestellt würde, und in südlichen Ländern, in denen ohnehin ein hoher Geräuschpegel herrscht und sich das Publikum erfahrungsgemäß um Alarmsignale gar nicht mehr kümmert. Das Stillsetzen der Elektrik stellt beim Abschleppen des Fahrzeuges durch einen Dieb ebenfalls kein Hindernis dar.

Der Erfindung liegt die Aufgabe zugrunde, eine Vorrichtung zur Diebstahlsicherung gemäß dem Oberbegriff von Anspruch 1 derart zu gestalten, daß das die Sicherung auslösende Organ vom Dieb nicht außer Kraft gesetzt werden kann, sei es vor oder während des Diebstahles, und daß auch die eingeleitete Sicherung nicht durch Unbefugte wieder aufgehoben werden kann.

Diese Aufgabe wird durch die kennzeichnenden Merkmale von Anspruch 1 gelöst.

Der Erfinder hat hierbei im einzelnen folgendes erkannt: Von den zahlreichen Möglichkeiten von Sicherungsmaßnahmen ist das Festsetzen der Bremse die einzig wirkungsvolle, die sich von einem Unbefugten nicht rückgängig machen läßt. Selbst wenn der Dieb bei einem Fahrzeug mit erfindungsgemäßer Sicherungsvorrichtung das Bremsseil durchtrennen sollte, so ist dadurch noch nicht die Bremse gelöst. Vielmehr bleibt sie arretiert. Das betreffende Verriegelungselement zum Verriegeln der Bremsbacken ist nämlich allein durch Schließen der Schließvorrichtung de-aktivierbar. Im praktischen Falle besteht ja die Schließvorrichtung im allgemeinen aus dem Türschloss mit dem zugehörenden Schlüssel. Moderne Wagen haben häufig parallel zum mechanischen Schließsystem ein weiteres Schließsystem, das durch Impulse über elektrische Anschlüsse betätigt wird, umfassend Sensoren, Chips, Infra-Rot-Empfänger, Ultraschall-Empfänger, Funk-Empfänger oder dergleichen. Ist ein Fahrzeug derart ausgestattet, so nimmt der Befugte Fahrzeughalter beim Abstellen eines Fahrzeuges die folgenden Handlungen vor:
Zunächst stellt er den Motor ab und zieht den Zündschlüssel heraus. Sodann zieht er die Handbremse an, so daß sich die Bremsbacken an die Bremstrommel anlegen. Sodann verläßt er das Fahrzeug, wobei er den Schlüssel (im allgemeinen der Zündschlüssel selbst) in das Türschloß steckt und umdreht. Ist eine durch Infra-Rot-Licht betätigbare zusätzliche Schließsicherung vorhanden, sowie oben erwähnt, so betätigt er den Infra-Rot-Sender durch Druck hierauf. Damit wird zum einen das Infra-Rot-Schließsystem betätigt, zum anderen wird - gemäß der Erfindung - ein Verriegelungselement aktiviert, das für ein Verriegeln der Bremsbacken sorgt. Im praktischen Falle kann es sich hierbei um Bolzen handeln, die sich vor den betreffenden Bremsbacken legen, so daß sie sich in dessen Bewegungsbahn befinden, und daß der Bremsbacken seine Anpreßposition nicht mehr verlassen kann.

Dabei bleibt die Bremskraft stets aufrechterhalten, und zwar aufgrund der einer solchen Bremse eigenen Haltefeder. Auch ein Durchtrennen des Bremsseiles würde hieran nichts ändern.

In jenem Falle, in dem kein Infra-Rot-Sicherungssystem vorgesehen ist, sondern nur das mechanische Schließsystem mit Türschloß und Türschlüssel, wird das Verriegelungselement für die Bremsbacken bereits beim Umdrehen des Schlüssels im Türschloß aktiviert, so daß hierdurch der betreffende Bremsbacken in seiner Bremsposition fixiert wird.

Ein Diebstahl des Fahrzeuges durch Abmontieren der Räder ist bei Anwendung der erfindungsgemäßen Vorrichtung ebenfalls nicht möglich, und zwar einfach deshalb, weil die Bremsbacken angezogen sind. Ein Wegschieben des Fahrzeuges oder ein Wegfahren mit eigener Motorkraft ist natürlich ebensowenig möglich.

Das Entriegeln der Bremsbacken mittels des Bremsbacken-Verriegelungselementes ist allein dem befugten Halter möglich, nämlich durch Betätigen des Türschlüssels oder gegebenenfalls des Infra-Rot-Senders. Bekanntlich kennt allein der Originalsender den Code, den er dem Empfänger zur Verriegelung eingegeben hat. Somit ist es nicht möglich, mit einem anderen Sender oder durch andere Eingriffe die Entriegelung der Hand- oder Feststellbremse zu lösen.

Ganz entscheidend ist, daß die Erfindung in keiner Weise in die Funktion des Bremssystemes selbst eingreift. Sie nutzt die Bremse zwar zur Verwirklichung der Sicherungsmaßnahme bei stillgesetztem Fahrzeug aus. Die eigentliche Bremsfunktion bleibt jedoch völlig unberührt. Dies könnte ja auch tödliche Folgen haben. Dies ist vermutlich der Grund dafür, daß die bekannten Diebstahl-Sicherungsvorrichtungen das Bremssystem eines Kraftfahrzeuges in keiner Weise einbezogen haben.

Die Erfindung ist anhand der Zeichnung näher erläutert. Darin ist im einzelnen folgendes dargestellt:
Figur 1 zeigt eine Trommelbremse in perspektivischer Darstellung.
Figur 2 zeigt ein Ausführungsbeispiel für ein Verriegelungsorgan zum Verriegeln der Bremsbacken.

In Figur 1 erkennt man im einzelnen die folgenden Elemente:
- 1: - Bremsschlauch
- 2: - Ankerplatte
- 3: - Radbremszylinder
- 4: - Einstellvorrichtung
- 5: - Bremsbacke
- 6: - Bremsbelag
- 7: - Handbremsseil
- 8: - Haltefeder
- 9: - Bremstrommel
- 10: - Rückzugfeder
- 11: - Hebel für Feststell- oder Handbremse

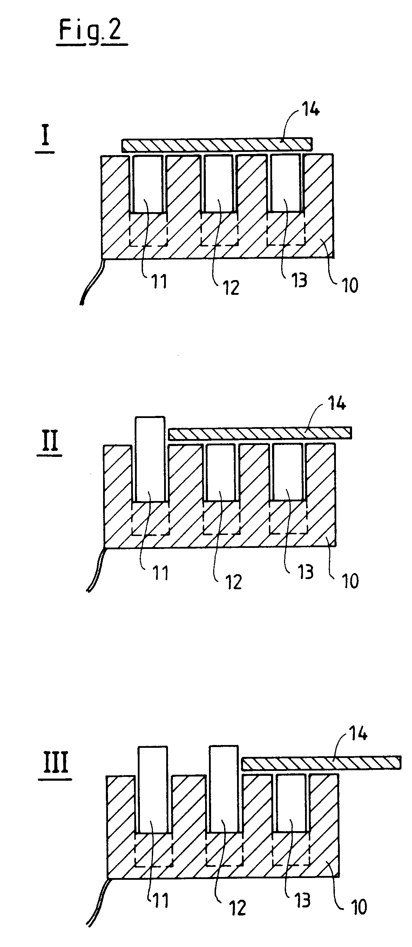

Das in Figur 2 dargestellte Verriegelungselement umfaßt im einzelnen die folgenden Bauteile: In einem Gehäuse 10 sind drei Bolzen 11, 12, 13 enthalten. Die Bolzen sind aus dem Gehäuse ausfahrbar. Ein mit dem Handbremshebel gekoppelter Schieber 14 ist auf der Ausfahrseite den Bolzen zugeordnet. Dabei ist das Verriegelungselement in drei Zuständen I, II und III dargestellt. Im ersten Zustand befinden sich alle drei Bolzen 11, 12, 13 innerhalb des Gehäuses 10. Sie sind vom Schieber 14 positiv abgedeckt, und damit gegen Herausfahren aus dem Gehäuse 10 zuverlässig gesichert. Schieber 14 nimmt zwangsläufig diese Position ein, wenn die Handbremse geöffnet, und somit der Handbremshebel nicht gezogen ist, so wie dies bei Fahrt der Fall ist.

Zustand II liegt dann vor, wenn der Handbremshebel leicht angezogen ist, d.h. im allgemeinen im Ruhezustand des Fahrzeuges. Wie man erkennt, ist Bolzen 11 ausgefahren, während die Bolzen 12 und 13 noch von Schieber 14 abgedeckt sind.

Bei Zustand III sind die beiden Bolzen 11 und 12 ausgefahren, nur Bolzen 13 ist noch abgedeckt. In einem Endzustand, der hier nicht dargestellt ist, wären alle drei Bolzen 11, 12, 13 ausgefahren.

Die Bolzen bewegen sich beim Ausfahren in eine Position, in welcher der betreffende Bremsbacken positiv verriegelt ist, d.h. in seiner an der Bremstrommel anliegenden Position gehalten ist. Das Ausfahren wird, wie oben beschrieben, durch das Drehen des Schlüssels im Türschloß bewirkt, gegebenenfalls durch das Betätigen des Infra-Rot-Senders oder dergleichen.

Wichtige Merkmale und Vorteile der Erfindung sind im folgenden nochmals wiedergegeben.

Hand- oder Feststellbremssicherung als Diebstahlsicherung dadurch gekennzeichnet, daß bei Sicherungsstellung, also bei angezogener Hand- oder Festellbremse, bei unbefugten Benutzen des Fahrzeuges die Hand- oder Feststellbremse nicht mehr gelöst werden kann, dadurch gekennzeichnet, daß bei Durchtrennung des Bremsseiles, -zuges oder - gestänges des Fahrzeuges die Hand- oder Feststellbremse weiterhin in gesicherter Stellung bleibt und das Fahrzeug nicht wegbewegt werden kann. Das Ziehen oder Schieben des durchtrennten Bremsseiles, -zuges oder -gestänges hat keinerlei Auswirkungen auf die angezogene Hand- oder Feststellbremse, denn die Bremsbacken werden gegen die Innenwand der Trommelbremse durch das Anziehen der Hand- oder Feststellbremse gepreßt oder gedrückt und in dieser Position gesichert.

Die Lösung dieser Aufgabe wird durch einen Elektromagneten und/oder einer elektro-mechanischen oder mechanischen Vorrichtung, welche innerhalb der Bremstrommel angebracht ist und die angezogene Bremsvorrichtung der Hand- oder Feststellbremse in angezogener Endstellung hält bewirkt. Dabei ist es egal, an welcher Stelle der Hebel der Hand- oder Festellbremse durch den Anzug der Hand- oder Feststellbremse ist. Durch diesen Vorgang greifen wir nicht in irgendeiner Weise in das herkömmliche Bremsverfahren ein, sondern wir sichern nur zusätzlich beim in Ruhestellung gebrachten Fahrzeug die Hand- oder Feststellbremse.

Die Ent- und Verriegelung erfolgt durch Impulse über elektrische Anschlüße, die mit mehreren im Kraftfahrzeug angeordneten Sensoren, Chips, Kontakten, Infra-Rot-Empfängern, Ultraschall-Empfängern, Funk-Empfänger oder dergleichen verbunden sind. Es können die vorher genannten Varianten unabhängig voneinander in Einzelfunktionen auch tätig werden.

In Verbindung mit oder in einer Alarmanlage integriert oder ohne Alarmanlage ist beim Abstellen und Verlassen des Fahrzeuges mit angezogener Hand- oder Feststellbremse die Sicherung beim Schließen der Fahrzeugtüren durch den Original-Türschlüssel, den Funk, Infra-Rot, Ultraschall, Magnetkarte oder dergleichen durch einen dieser Kontakte oder Impulse erfolgt. In gleicher Weise können individuell in oder am Fahrzeug die oben genannten Variationen unabhängig vom Schließen der Fahrzeugtüre gehandhabt werden und/oder in einer Kombination beider angeführten Möglichkeiten ausgeführt werden.

Durch Verschlüsselung einer jeweiligen Codeänderung bei jedem Vorgang für Verriegelung und Entriegelung durch einen Empfänger, der individuell im Kraftfahrzeug angebracht ist, kann der Halter durch einen Sender seine Hand- oder Feststellbremse entriegeln oder verriegeln und der Dieb hat keine Möglichkeit die Hand- oder Feststellbremse aus seiner Endstellung zu lösen, denn nur der Original-Sender kennt den Code, den er dem Empfänger zur Verriegelung gegeben hat, somit ist es nicht möglich durch andere Eingriffe die Entriegelung der Hand- oder Feststellbremse zu lösen. Das heißt, sollte der Dieb die Scheiben einschlagen oder die Fahrzeugtüren gewaltsam öffnen oder einen nachgemachten Schlüssel verwenden, so gelingt es ihm aber nicht die Hand- oder Feststellbremse zu lösen und das Fahrzeug weg zu schieben.

Bei angezogener Hand- oder Feststellbremse und durch den Sender betätigte Verriegelung der Hand- oder Feststellbremse gibt der Empfänger an einen Chip die Code-Verriegelung bekannt und der Chip speichert diese und aktiviert eine Anlassersperre für den Motor, wodurch ein Kurzschließen und Wegfahren des Fahrzeuges ausgeschlossen wird. Somit ist es auch nicht möglich die angezogene Hand- oder Feststellbremse durch wegfahren des Fahrzeuges durch Motorkraft zu umgehen.
Das Lösen und die Freigabe der verriegelten Hand- oder Feststellbremse und die Anlassersperre für den Motor erfolgt durch den Original-Sender (z.B. Infra-Rot-Sender), der den Code beim Verriegeln abgegeben hat und den der Chip sowie der Empfänger gespeichert hat. Durch das Empfangen des Original-Codes beim Empfänger, der die Freigabe der Verriegelung der Hand- oder Feststellbremse an den Chip weitermeldet, jetzt wertet der Chip den Code auf Richtigkeit aus, und aktiviert die Freigabe der Anlassersperre für den Motor.

Mit einer und/oder in einer Alarmanlage integriert, können die oben genannten Varianten kombiniert werden.

## Patentansprüche

1. Vorrichtung zur Diebstahlsicherung eines motorgetriebenen Fahrzeuges,
das wenigstens eine Trommelbremse aufweist, die eine Bremstrommel und Bremsbacken umfaßt, die ihrerseits bei angezogener Bremse an der Bremstrommel anliegen und
wenigstens eine Fahrzeugtür mit einem Türschloß aufweist, das eine Schließvorrichtung mit zugehörendem Betätigungsorgan umfaßt (z.B. Schloß mit Schlüssel),
wobei ein Verriegelungselement (10, 11, 12, 13, 14) zum Verriegeln der Bremsbacken (5) in an der Bremstrommel (9) anliegendem Zustand vorgesehen ist und
das Verriegelungselement (10, 11, 12, 13, 14) beim Schließen und Öffnen der Schließvorrichtung aktivierbar und de-aktivierbar ist,
dadurch gekennzeichnet, daß
das Verriegelungselement ein Gehäuse (10) aufweist, das Verriegelungsbolzen (11, 12, 13) umfaßt, wobei wenigstens einer
der Verriegelungsbolzen (11, 12, 13) aus dem Gehäuse (10) in eine Position ausfahrbar ist, in welcher die Bremsbacken positiv verriegelt sind und daß
ein mit der Handbremse des Fahrzeugs koppelbarer Schieber (14) auf der Ausfahrseite des Gehäuses (10) den Verriegelungsbolzen (11, 12, 13) zugeordnet ist.

2. Vorrichtung nach Anspruch 1, dadurch gekennzeichnet, daß die Schließvorrichtung eine elektrische oder elektronische Schaltung mit zugehörendem Aktuator umfaßt, z.B. einen Infra-Rot-Sender.

## Claims

1. Anti-theft device for a motorized vehicle with at least one drum brake comprising a brake drum and brake shoes which abut the brake drum when the brake is applied; and
at least one vehicle door with a door lock comprising a locking mechanism with associated operating element (for example lock with key), and
that a locking element (10, 11, 12, 13, 14) for locking the brake shoes (5) whilst abutting the brake drum (9) is provided, and
that the locking element (10, 11, 12, 13, 14) is activatable and de-activatable when locking and opening the locking device
**characterized in that**
the locking element comprises a housing (10) with locking bolts (11, 12, 13), and that at least one of the locking bolts (11, 12, 13) is moved out of the housing (10) into a position in which the brake shoes are positively locked, and that a slide (14) which is connectible to the handbrake of the vehicle is on the outletside of the housing (10) associated with the locking bolts (11, 12, 13).

2. A device according to claim 1, **characterized in that** the locking device is an electrical or electronic circuit with associated actuator, for example an infra-red transmitter.

## Revendications

1. Dispositif antivol d'un véhicule entraîné par un moteur, ce dispositif comportant un frein à tambour qui comprend un tambour de frein et des mâchoires de frein qui de leur côté, lorsque le frein est serré, s'appliquent sur le tambour de frein, ce dispositif comportant en outre au moins une porte du véhicule avec une serrure de porte, qui comprend un dispositif de fermeture avec l'organe d'actionnement correspondant (par exemple serrure avec clef), tandis qu'il est prévu un élément de verrouillage (10,11,12,13,14) pour verrouiller les mâchoires de frein (5) lorsqu'elles sont en application sur le tambour de frein (9), et cet élément de verrouillage (10,11,12,13,14) est susceptible d'être activé et désactivé lors de la fermeture et de l'ouverture du dispositif de fermeture,
dispositif antivol caractérisé en ce que l'élément de verrouillage comporte un boîtier (10) qui comprend des verrous (11,12,13), tandis qu'au moins un de ces verrous (11,12,13) est susceptible d'être sorti dans une position, dans laquelle les mâchoires de frein sont verrouillées de façon positive, et en ce qu'un coulisseau (14), susceptible d'être couplé avec le frein à main du véhicule, est associé aux verrous (11,12,13) sur le côté sortie du boîtier (10).

2. Dispositif selon la revendication 1, caractérisé en ce que le dispositif de fermeture comprend un montage électrique ou électronique avec actuateur correspondant, par exemple un émetteur infrarouge.
